# EUROPEAN PATENT APPLICATION

(11) **EP 1 637 947 A1**
(43) Date of publication of application: **22.03.2006**
(21) Application number: 05255733.7
(22) Date of filing: 15.09.2005
(51) Int. Cl.: G05B 19/401

(54) **System and method for on-machine probing**

(30) Priority: 16.09.2004 US 942204
(71) Applicant: UNITED TECHNOLOGIES CORPORATION, Hartford, CT 06101 (US)
(72) Inventor: Jesse, Christian, Cromwell, CT 06416 (US)
(74) Representative: Leckey, David Herbert

(57) **Abstract**

A method and system for generating instructions for probing operations executable on a machine tool includes a probe module (16) interfaced with a computer aided manufacturing program (14). Features selected from a digital model are utilized to determine part features for probing. The coordinates of those features are utilized to generate instructions combined and interwoven with machining instructions for fabrication of the part. The probing instructions are then converted by a post processor (18) into executable instructions for use in a specific machine tool (22).

## Description

### BACKGROUND OF THE INVENTION

This application relates to a system and method of creating a program executable on a machine tool. More particularly, this invention relates to a system and method of creating a program for operation of an inspection probe useable on a machine tool.

Computer aided manufacturing (CAM) is a term associated with many aspects of part fabrication and design. Typically, a desired part configuration is created as a digital model that can be modified and manipulated through the use of a graphical user interface. The digital model is utilized to generate instructions executed by a machine tool. Conversion of part geometries from a digital model to machine language utilized by a numerically controlled machine is performed at different levels of specificity. A first level is a generic level where the geometry of a part is converted into a numerical control program that is not specific to any one machine. The generic numerical program representing instructions for fabrication of a desired part can then be transferred to any number of different numerically controlled machines. The generic numerical program is then modified by a post processor to generate a numerical program specific to an individual machine. The specific numerical program provides individualized instructions that are applicable to the individual machine.

In some instances it is desirable to measure a portion of the part during the machine operation. The measurement is utilized for various reasons such as confirming that a desired feature is produced within the part as desired, or to vary subsequent operations according to current dimensions for a specific part. A machine probe typically performs the measurement operations. Typically, a machine probe utilizes a touch sensitive device that is moved to a specific coordinate. Contact between the probe and the part is sensed when an internal switch is opened and its circuit is interrupted. This is when that coordinate is recorded.

Difficulties arise when programming movements and operations of the probe that are to be interwoven with machining operations. Unlike instructions for the machine tools, such as cutters, drills, mills, etc... that are automatically derived from the digital model and the generic numerical program, instructions for operation of the probe typically are manually input, specific to the individual machine tool. Because instructions for operation of a probe are often unique for each machine, instructions for the probe require manually entered instructions instead of automated programming. Such manual programming is tedious, complicated and time consuming.

Accordingly, it is desirable to develop a method for automatically generating instructions for operation of a probe that can be included within a generic numerical program and customized for each specific machine tool.

### SUMMARY OF THE INVENTION

This invention is a system and method for generating probing instructions from a digital model to execute on a numerically controlled machine that drives three or more axes.

The system and method utilizes a probe module mated to operate with a computer aided manufacturing program. The probe module utilizes the digital model for generating instructions for probing operations that are performed during machining operations. Instructions generated for machining by the computer aided manufacturing program and for probing operations by the probe module are generic. The generic nature of the instructions produced provides for adaptation to many different configurations of machine tools. The generic instructions are input into a post processor that includes specific probe code. The probe code communicates with the probe module to convert the generic probe operating instructions into specific instructions executable by a machine tool.

Accordingly, the system and method of this invention provides for the generation of probing instructions interwoven with machining instruction thereby eliminating tedious individual programming of probing operations.

These and other features of the present invention can be best understood from the following specification and drawings, the following of which is a brief description.

### BRIEF DESCRIPTION OF THE DRAWINGS

Figure 1 is a schematic view of one embodiment of a system for generation of a computer numerical control program according to this invention.
Figure 2 is a block diagram illustrating steps for generating instructions for a specific machine tool.
Figure 3 is a block diagram illustrating one embodiment of process flow of the present invention.

### DETAILED DESCRIPTION OF THE PREFERRED EMBODIMENT

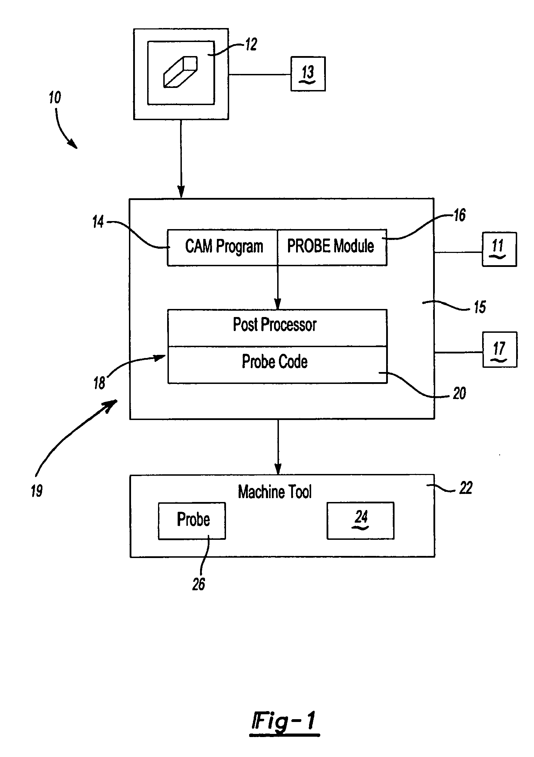

Referring to Figure 1, a system 10 is shown schematically for generating probing operating instructions from a digital model of a part. The system 10 includes a graphical user interface 12 that displays the part geometry and a user input device 13 that provides for interaction and selection of specific features of the part produced, for example, in a CAM of Computer Aided Design (CAD) system. The graphical user interface 12 is part of a computer system 19 including a microprocessor 11, a memory device 15 and at least one computer readable storage medium 17. The computer readable storage medium 17 includes known devices, such as random access memory devices, hard disk, optical, electrical and magnetic storage devices along with other known medium.

A computer aided manufacturing program 14 that generates instructions executable on a machine tool for fabricating the part utilizes the digital model. The computer aided manufacturing program 14 may be any of the many commercially available programs, such as those offered by Unigraphics for converting a digital model into machine executable instructions. The system 10 of this invention includes a probe module 16 that is mated to operate with the computer aided manufacturing program 14. The probe module 16 communicates with the graphical user interface 12 and utilizes the digital model of a part to generate instructions for probing operations executed concurrently with machining operations.

Instructions generated for machining by the computer aided manufacturing program 14 and for probing operations by the probe module 16 are generic. The generic nature of the instructions produced provides for adaptation to many different configurations of machine tools. The generic instructions are input into a post processor 18 that includes a probe code 20. The probe code 20 communicates with the probe module 16 to convert the generic probe operating instructions into specific instructions executable by a machine tool 22 and a probe 26 on the machine tool 22.

The machine tool 22 includes several probing subroutines 24 that are triggered by instructions generated for probing selected features of the part The subroutines 24 can include operation of the probe 26, data acquisition and manipulation programs as well as any other program or instruction related to the gathering and manipulation of data during a probing operation. The system 10 is shown schematically and described with specific features, however, a worker versed in the art with the benefit of this disclosure would understand that other elements can also be included within the system 10.

The system 10 executes a method for graphical programming of probing operations that are interwoven with machining operations. The system 10 of this invention utilizes digitally defined part geometry to determine desired probe coordinates. Once the target coordinates for the probe to contact the desired feature on the part are determined, the system 10 generates a set of probing instructions within the generated generic computer numerically controlled program. In this way, the probing commands are integrated with the machining operation instructions and are converted from the generic instructions to the specific instructions for the desired machine tool in a post processor along with the machining instructions.

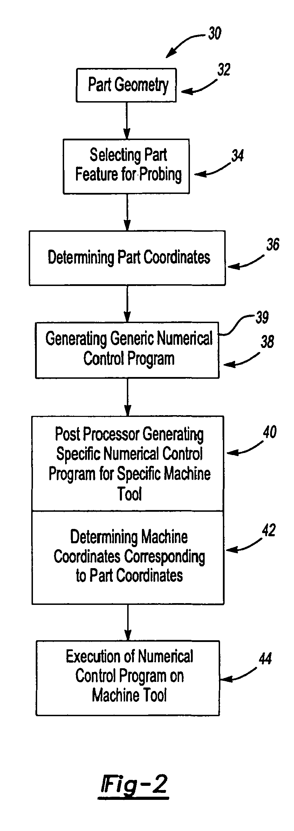

Referring to Figure 2, a block diagram schematically illustrates one possible method 30 of the present invention and includes identifying and defining a digital model of a part as indicated in step 32. The digital model provides for the use of the graphical user interface 12 for selecting features of a part for probing in step 34. The selection process is accomplished through the graphical user interface 12 and the user input device 13. The graphical user interface 12 provides for selection of any feature on the part. The feature of the part may include a hole, surface, or combination of points and surfaces providing desired relationships to features of the part. Once the desired feature for probing is selected, the system 10 determines part coordinates for the selected feature in step 36. The part coordinates are determined relative to the part itself as represented by the digital model.

The part coordinates are utilized to generate a generic numerical control program 39 in step 38. The generic numerical control program 39 includes instructions executable by the machine tool 22 as well as instructions for operation of the probe 26 interleaved within the machining operations. The probing instructions and machining instructions can be generated concurrently. However, it is not necessary that instructions for probing operations be concurrently generated with machining instructions. Instructions generated from the digital part geometry can be added to the generic program at any point prior to a post-processing step indicated at 40.

The generic numerical control program 39 provides for a part to be fabricated on a plurality of differently configured machine tools. As appreciated, each machine tool includes unique features and programming requirements. The post processor 18 converts the generic instructions generated at step 38 into specific instructions unique to a specific machine tool. The post processor 18 of this invention includes the probe code 20 utilized to transform the generic operating instructions for probe operation into instructions specifically tailored to the specific machine tool.

The post-processing step 40 includes the step of determining machine coordinates in step 42 based on the part coordinates determined relative to the digital mode. The determination of part coordinates is determined in view of specific features represented on the digital model. The machine coordinates determined in step 42 are the result of a transformation of those part coordinates into a set of coordinates based on the specific machine tool. The determination of machine coordinates creates coordinates for the part within the machine environment. Further, the transformation includes vector information utilized for directing operations for fabricating and probing the part within the specific desired machine tool environment.

The instructions are then executed on the machine tool at step 44. The instructions unique to the individual machine tool include instructions that trigger probing subroutines within that individual machine tool. The individual subroutines 24 can provide many different desired performance and operating parameters utilized for data acquisition, manipulation, and concurrent modification of machining instructions.

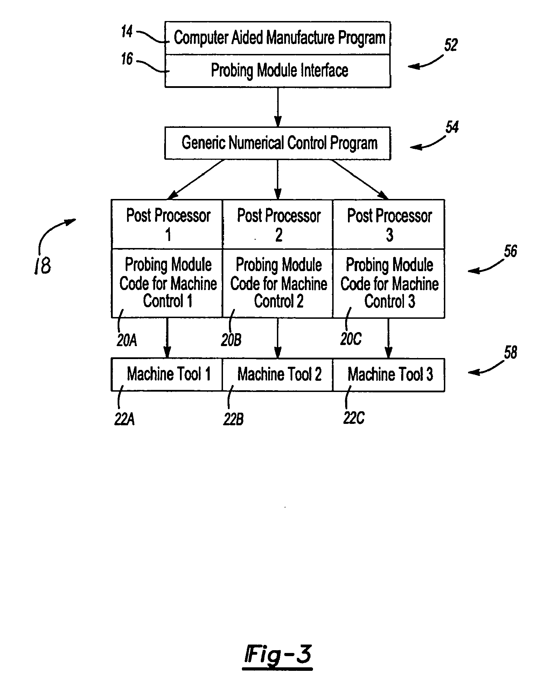

Referring to Figure 3, a block diagram representing one possible embodiment of the flow of data from the digital model through to the specific machine tool is shown at 58. The probe module 16 interfaces with, or is part of, the computer aided manufacturing program 14 as shown at 52 to extract information represented within the digital model. The probe module 16 converts user inputs from the graphical user interface 12 into probing commands that are integrated into a generic numerical control program understood and executable by the machine tool as shown schematically at 54. Some of the probing operations that are generated represent best industry practices and techniques. Other instructions are transformed within the post processor to perform special functions, calculations and data acquisition.

The probing commands generated within the generic numerical control program 54 are input through a post processor, indicated at 56. The post processor 18 includes specific features for adaptation to a specific machine tool. Each of the machine tools 22A, 22B, and 22C are typically unique with respect to each other, and therefore a unique post processing probing code 20A, 20B, and 20C is included in the post processor step 56 for each of the machine tools 22A, 22B, and 22C. In the post processor step 56, the specific machine coordinates and vectors are determined. The post processor 18 includes the probe codes 20A, 20B, and 20C that are tied into the probe module 16 and that are specific to the machine tool 22A, 22B, 22C. The post processor 18 is modified to include the probe code 20A, 20B, and 20C that recognizes, interprets and converts the generic instructions in to specific instructions for the operation of a probe on each of the corresponding machine tools 22A, 22B, and 22C.

Once the generic numerical program 39 is run through the post processor 18, it is downloaded into the specific machine tool 22A, 22B, and 22C as indicated at 58. Each machine tool 22A, 22B, and 22C executes the instructions including the probing commands along with the machining commands. The probing instructions can include the triggering of resident probing subroutines within each of the machine tools 22A, 22B, and 22C.

The method and system of this invention provides for the automatic generation of executable probing instructions for a machine tool derived from a digital model. The probing module is run as an add-on module to, or integral with, a computer manufacture program for generating machining instructions. The probing module provides for probing operations to be programmed along with the machining operations providing for interweaving of probing and machining operations during the fabrication of a part.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of generating probing instructions for a tool comprising the steps of:
(a) selecting at least one feature of a part for probing;
(b) determining part coordinates of the at least one selected feature; and
(c) generating instructions for executing probing of the at least one selected feature at the determined part coordinates.

2. The method as recited in claim 1, wherein said step (c) generates probing instructions concurrently with the generation of instructions for executing machine operations.

3. The method as recited in claim 2, wherein said step (c) includes converting the instructions into probing instructions executable on a machine tool.

4. The method as recited in claim 3, wherein said converting step is performed by a post-processor.

5. The method as recited in claim 1, wherein said step (c) includes the step of generating generic instructions including said instructions for executing probing and instructions for executing machining operations on a machine tool.

6. The method as recited in claim 5, including the step of converting said generic instructions into specific instructions unique to an individual machine tool.

7. The method as recited in claim 6, wherein said instructions unique to an individual machine tool includes instructions that trigger probing subroutines within the individual machine tool.

8. The method as recited in any preceding claim, wherein said step (c) includes generating instructions executable by a machine tool.

9. The method as recited in any preceding claim, wherein said step (a) includes generating a model representing part geometry.

10. The method as recited in any preceding claim, wherein said step (a) includes selecting features to be probed from a model representing part geometry.

11. The method as recited in any preceding claim, wherein said step (c) includes the step of converting the determined part coordinates into machine coordinates.

12. The method as recited in any preceding claim, wherein said step (c) includes generating probing instructions convertible to specific instructions for operating a specific machine tool.

13. The method as recited in any preceding claim, wherein said steps are contained in a plurality of executable instructions stored on a computer readable medium.

14. A method of generating instructions for operating a machine tool, said method comprising the steps of:
(a) selecting at least one feature of a part for probing during fabrication;
(b) determining part coordinates for the at least one selected feature; and
(c) generating a generic set of instructions for fabricating and inspecting the part.

15. The method as recited in claim 14, wherein said set of instructions are convertible into instructions executable on an individual machine tool.

16. The method as recited in claim 14 or 15, including the step of generating specific instructions executable on a desired machine tool in view of said generic set of instructions.

17. The method as recited in claim 16, wherein said specific instructions generating step is performed by a post-processor.

18. The method as recited in any of claims 14 to 17, including the step of generating machine coordinates in view of said determined part coordinates.

19. The method as recited in claim 16, wherein said specific instructions include a trigger for initiating operation of a subroutine present within the desired machine tool.

20. A system (10) for generating instructions executable on a machine tool comprising:
a probing module (16) for extracting information pertaining to a desired geometry from a digital model; and
a post processor (18) for transforming information extracted from said probing module into machine tool executable instructions.

21. The system as recited in claim 20, wherein said probing module (16) interfaces with a computer aided manufacturing program (14).

22. The system as recited in claim 20 or 21, including a graphical user interface (12) for selecting the desired geometry from the digital model.

23. The system as recited in any of claims 20 to 22, wherein said machine tool executable instructions include instructions for probing operations combined with instructions for machining operations.

24. A computer-aided manufacturing system comprising:
a means for selecting at least one feature of a part for inspection during manufacture;
a means for determining coordinates of said at least one selected feature; and
a means for generating instructions to inspect said at least one selected feature at said determined coordinates.

25. The system as recited in claim 24, including a means for generating machine tool executable instructions for probing operations combined with instructions for machining operations.

26. The system as recited in claim 24 or 25, including a means for tailoring generated instructions to inspect said at least one selected feature to a specific machine tool.

27. A method of generating instructions for a machine probe comprising the steps of:
(a) using a computer-aided manufacture program to generate machine instructions and inspection instructions for a machine tool; and
(b) providing the machine instructions and the inspection instructions to the machine tool.

28. The method as recited in claim 27, wherein said providing step includes using a post-processor to convert said machine instructions and said inspection instructions to instructions specific to the machine tool.
